Europäisches Patentamt

European Patent Office

Office européen des brevets

(19)

(11) Numéro de publication: **0 029 772**
**B1**

(12) **FASCICULE DE BREVET EUROPEEN**

(45) Date de publication du fascicule du brevet:
**11.01.84**

(21) Numéro de dépôt: **80401622.8**

(22) Date de dépôt: **13.11.80**

(51) Int. Cl.³: **H 01 C 10/10**, G 01 L 1/18,
G 01 L 9/06

(54) **Procédé de fabrication d'une jauge piézorésistive.**

(30) Priorité: **22.11.79 FR 7928806**

(43) Date de publication de la demande:
**03.06.81 Bulletin 81/22**

(45) Mention de la délivrance du brevet:
**11.01.84 Bulletin 84/2**

(84) Etats contractants désignés:
**CH DE GB IT LI SE**

(56) Documents cités:
**FR - A - 2 275 004**
**US - A - 3 164 796**

**REVIEW SCIENTIFIC INSTRUMENTS, vol. 46, no. 10,
octobre 1975, New York US R.R. HORNING et al.:
"Calibration studies of the carbon piezoresistive
gauge", pages 1374-1379**

(73) Titulaire: **COMMISSARIAT A L'ENERGIE ATOMIQUE
Etablissement de Caractère Scientifique Technique et
Industriel, B.P. 510, F-75752 Paris Cedex 15 (FR)**

(72) Inventeur: **Pascal, Claude, 7, Allée de la Pinède,
F-33610 Cestas (FR)**
Inventeur: **Canet, Roland, "Les Genêts" 30, rue
Delestraint, F-33310 Lormont (FR)**
Inventeur: **Delhaes, Pierre, 3, Allée de Moulerens,
F-33170 Gradignan (FR)**
Inventeur: **Pacault, Adolphe, Domaine Universitaire,
F-33405 Talence (FR)**

(74) Mandataire: **Mongrédien, André et al, c/o
BREVATOME 25, rue de Ponthieu, F-75008 Paris (FR)**

**0 029 772**

## Procédé de fabrication d'une jauge piézorésistive

La présente invention a pour objet un procédé de fabrication d'une jauge piézorésistive.

De façon plus précise, elle se rapporte à des jauges piézorésistives carbonées utilisables pour la mesure de pressions, et en particulier pour la mesure de pressions de l'ordre de 0,5 à 20 kbars, engendrées par des ondes de chocs.

On connaît des jauges piézorésistives comportant un élément de carbone piézorésistif maintenu entre deux conducteurs de cuivre, telles que les jauges décrites dans l'article Review Scientific Instruments, vol. 46, n° 10, octobre 1975, pages 1374−1379. Cependant, de telles jauges ont l'inconvénient de ne pas présenter une sensibilité suffisante notamment pour la mesure de pressions engendrées par des ondes de chocs.

On connaît également par le brevet américain 3 164 796 des jauges piézorésistives comportant un élément piézorésistif constitué par un mélange de particules de polyéthylène et de graphite.

Cependant, de telles jauges ne permettent pas la mesure de pressions élevées, en régime dynamique, par exemple de pressions engendrées par des ondes de chocs, avec une sensibilité suffisante.

La présente invention a précisément pour objet un procédé de fabrication de jauges piézorésistives qui permet justement l'obtention de jauges ne présentant pas les inconvénients précités.

Ce procédé consiste:

a) à préparer un support isolant en matière plastique comportant sur sa surface deux conducteurs métalliques disposés à un écartement donné, et

b) à former entre lesdits conducteurs un élément piézorésistif en déposant entre lesdits conducteurs une dispersion aqueuse de graphite colloïdal, en séchant ladite dispersion, en déposant ensuite entre lesdits conducteurs une résine polymérisable de façon à otenir un mélange homogène de la résine et du graphite et en polymérisant ladite résine déposée.

De préférence, selon le procédé de l'invention, on recouvre ensuite d'une feuille isolante en matière plastique l'ensemble constitué par le support isolant comportant sur sa surface les deux conducteurs entre lesquels est intercalé ledit élément piézorésistif.

Le procédé tel que caractérisé ci-dessus tire avantageusement profit du fait qu'en utilisant un milieu hétérogène tel qu'une dispersion aqueuse de graphite colloïdal (ou »Aquadag«, sorte de gel thixotropique), on obtient un élément piézorésistif présentant une plus grande sensibilité et un meilleur coefficient de piézorésistivité.

Pour obtenir après séchage un dépôt de graphite présentant des qualités satisfaisantes, on utilise de préférence une dispersion dont les grains de graphite ont une granulométrie moyenne inférieure à 1 $\mu$.

Par ailleurs, on ajuste la fluidité de la dispersion aqueuse de graphite colloïdal à une valeur appropriée.

Lorsque la dispersion est constituée par de l'Aquadag, de bons résultats sont obtenus avec des concentrations en graphite de 200 à 800 g/l, et de préférence d'environ 400 g/l de dispersion.

Selon l'invention, on dépose également entre lesdits conducteurs une résine polymérisable et on polymérise ladite résine déposée.

L'adjonction entre les conducteurs métalliques d'une résine polymérisable présente l'avantage de permettre d'ajuster à une valeur appropriée le coefficient de compressibilité de la jonction piézorésistive et d'obtenir ainsi un élément sensible qui ne présente pas une hystérésis importante et permet de ce fait une restitution satisfaisante des profils de détente.

Pour obtenir ce résultat, la résine utilisée doit être mélangée intimement au graphite et la concentration volumique en graphite de l'élément doit être suffisante par exemple supérieure à 60% pour que la jauge obtenue présente une résistance électrique appropriée.

De préférence, selon l'invention, on ajoute la résine polymérisable, après avoir séché la dispersion aqueuse de graphite colloïdal en faisant diffuser cette résine entre les grains de graphite obtenus par séchage de la dispersion.

Dans ce cas, on dépose avantageusement la résine polymérisable en imprégnant les grains de graphite d'une solution constituée par la résine polymérisable diluée dans un alcool tel que le méthanol.

Avantageusement, la résine polymérisable est une résine époxyde mélangée à un durcisseur, par exemple une résine époxyde mélangée à un durcisseur de la famille des polyamines, la proportion de durcisseur étant avantageusement de 20% en poids par rapport au poids de résine.

Ainsi, la résine en solution diffuse lentement entre les grains de graphite puis elle se polymérise entre ces grains, ce qui permet d'obtenir une jonction piézorésistive constituée par un mélange homogène de graphite et de résine polymérisée, qui présente un coefficient de compressibilité satisfaisant.

Pour assurer une diffusion satisfaisante de la résine, il est nécessaire que la solution d'imprégnation présente une fluidité convenable.

2

Lorsque la résine est de l'Araldite diluée dans du méthanol, la solution d'imprégnation contient avantageusement de 0,5 à 5 g de résine époxyde »Araldite« pour 2 à 8 ml de méthanol.

Par ailleurs, la quantité de solution utilisée pour l'imprégnation doit être contrôlée pour que la jonction piézorésistive obtenue ait une concentration suffisante en résine polymérisée et présente un coefficient de compressibilité satisfaisant.

Selon l'invention, on utilise une quantité de solution d'imprégnation telle que le rapport $R_0/R_{aq}$ dans lequel $R_0$ représente la résistance électrique du dépôt de graphite et de résine polymérisée et $R_{aq}$ représente la résistance du dépôt de graphite avant l'addition de résine, soit supérieur à 5.

De même, la quantité de résine ajoutée doit être contrôlée pour que la résistance électrique de la jauge obtenue soit suffisante. Généralement, une résistance de l'ordre de 50 ohms est requise.

Pour obtenir une résistance de cet ordre, on contrôle, selon le procédé de l'invention, la résistance du dépôt de graphite en ajustant l'épaisseur du dépôt de graphite colloïdal de façon à obtenir une résistance $R_{aq}$ de 6 à 10 ohms et on règle la quantité de solution d'imprégnation utilisée à une valeur telle que, avant polymérisation de la résine, la résistance électrique $R_{ar}$ du dépôt de graphite imprégné de résine soit de 80 à 90 ohms.

Dans ces conditions, on obtient un élément piézorésistif présentant une sensibilité importante et un comportement élastique.

L'invention sera mieux comprise à la lecture de la description qui suit, donnée bien entendu à titre illustratif et non limitatif, se référant au dessin annexé sur lequel:

—  la fig. 1 est une vue en perspective d'une jauge piézorésistive, selon l'invention,
—  la fig. 2 est un diagramme illustrant les variations de la résistance électrique (en ohms) de jauges piézorésistives obtenues par le procédé de l'invention, en fonction de la force exercée (en tonnes) pour 5 cycles de compression successifs,
—  la fig. 3 représente schématiquement le dispositif utilisé pour tester les propriétés des jauges piézorésistives de l'invention, et
—  les fig. 4a, 4b, 4c, sont des courbes illustrant la variation de potentiel (en volts) en fonction du temps (en μs) obtenus lors d'essais de pressions sous ondes de choc effectués sur une jauge obtenue par le procédé de l'invention.

## Exemple 1

Cet exemple se rapporte à la fabrication d'une jauge piézorésistive comportant une jonction piézorésistive obtenue à partir d'une dispersion aqueuse de graphite colloïdal.

Dans cet exemple, on utilise un support isolant ayant une épaisseur de 0,1 mm, réalisé en une résine polyimide connue sous la marque Kapton.

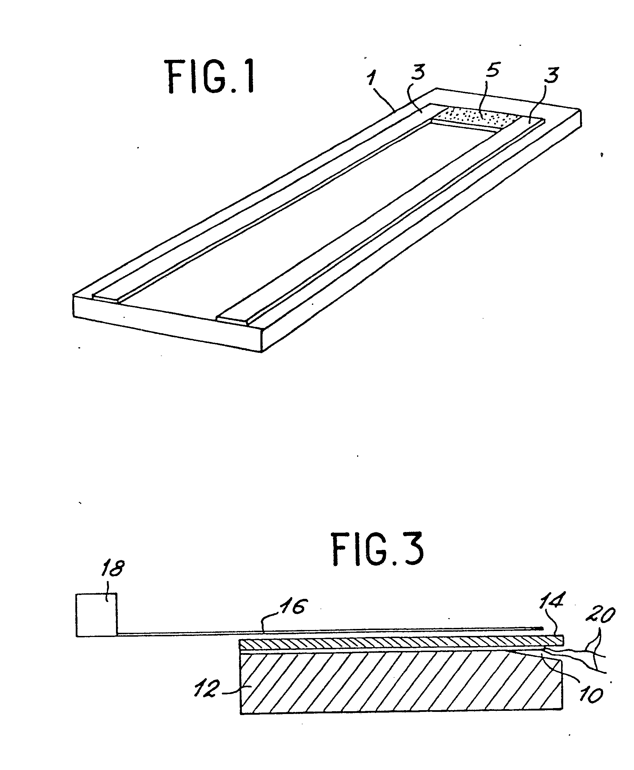

Comme on peut le voir sur la fig. 1, le support 1 est revêtu de deux conducteurs en cuivre 3, d'une largeur de 5 mm, disposés à 20 mm l'un de l'autre.

Selon le procédé de l'invention, on dépose entre les deux conducteurs 3, dans la zone 5, une dispersion aqueuse de graphite colloïdal constituée par de l'Aquadag et on ajuste l'épaisseur du dépôt 5 d'Aquadag à la valeur voulue pour obtenir une résistance de 6 à 10 ohms.

Après séchage de la dispersion, pendant environ 6 heures à la température ambiante, on recouvre par un collage au moyen d'une résine époxyde telle que l'Araldite, l'ensemble ainsi obtenu avec une feuille protectrice de Kapton en disposant l'ensemble recouvert de la feuille entre deux pièces métalliques chauffées à une température de 177° C.

On précise que les dimensions de la jonction piézorésistive 5 sont de 20 mm/5 mm.

On contrôle ensuite les propriétés de la jauge ainsi obtenue en la soumettant à des essais de pression en régime statique et en régime dynamique.

Pour les essais statiques, on soumet la jauge piézorésistive à une force exercée par une presse hydraulique et on réalise cinq cycles de compression successifs.

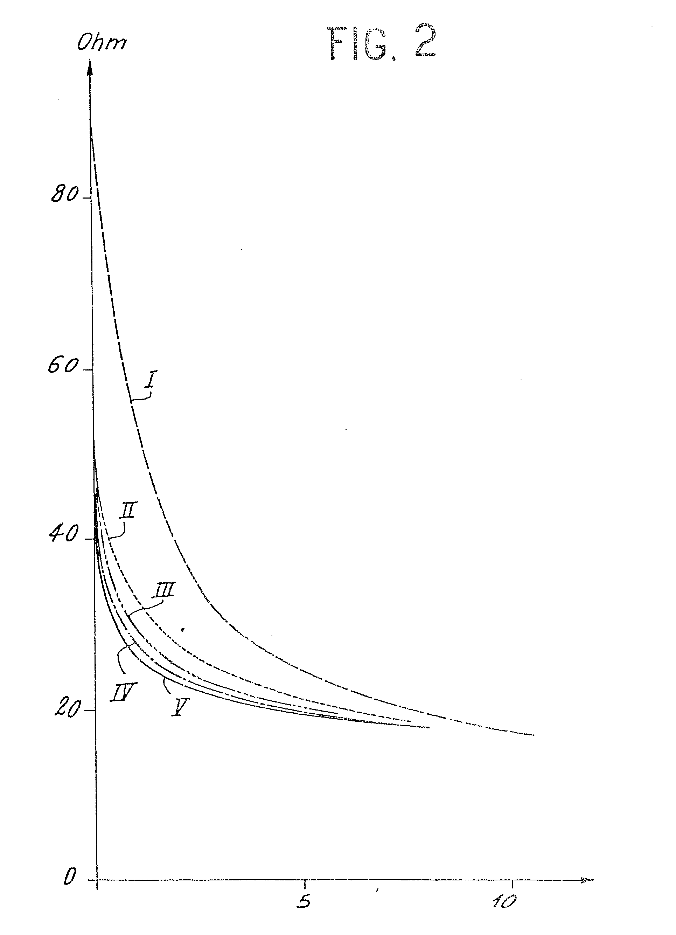

On détermine les variations de la résistance électrique de la jauge en fonction de la force exercée, pendant ces différents cycles de compression. Les résultats obtenus sont donnés sur la fig. 2 dont les courbes I, II, III, IV et V représentent respectivement les variations de la résistance électrique (en ohms) en fonction de la pression exercée (en tonnes) lors du 1er., du 2ème, du 3ème, du 4ème et du 5ème cycles de compression.

On note que la variation relative de résistance déterminée sur tout le domaine de pressions défini par la formule $\Delta R/R_0$ dans laquelle $\Delta R$ représente la variation de résistance et $R_0$ la résistance initiale de la jauge, est de:

—  0,80 pour le premier cycle, et
—  0,66 ± 0,01 pour les quatre cycles suivants.

3

Par ailleurs, le coefficient K défini par

$$K = \frac{1}{R}\ \frac{\Delta R}{\Delta P}$$

entre 0 et 10 kbars est égal à $-\ 80 \times 10^{-3}$ Kbar$^{-1}$ pour la première compression et $-\ (65 \pm 1) \times 10^{-3}$ Kbar$^{-1}$ pour les cycles suivants.

On remarque ainsi que le dépôt d'Aquadag présente un coefficient de piézorésistivité très important et que de plus lors de cycles de compression successifs, la jauge a nun comportement reproductible à partir du 2ème cycle de compression.

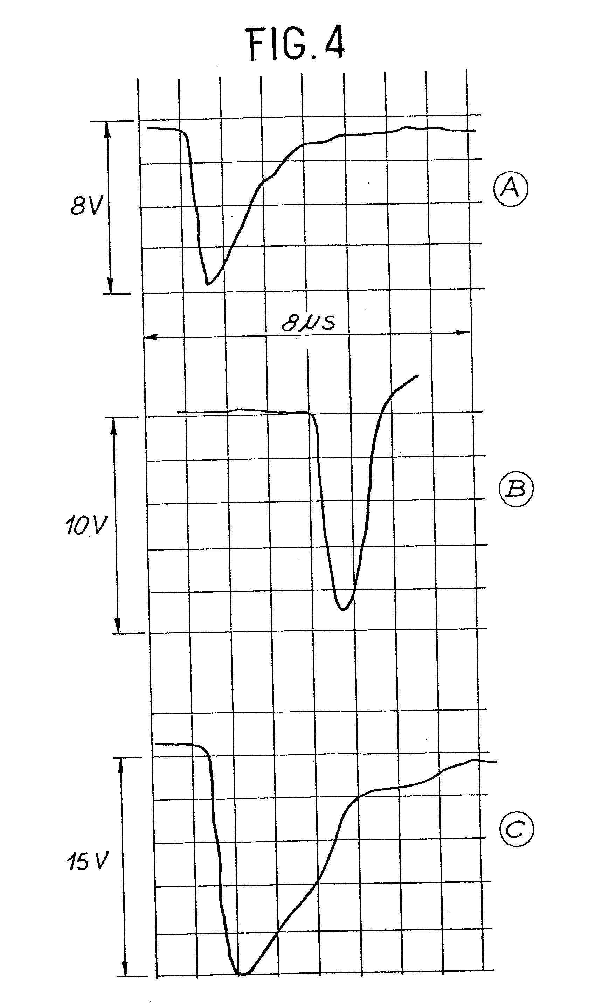

Les essais dynamiques de pression ou essais de chocs sont réalisés au moyen du dispositif représenté sur la fig. 3. Pour ces essais, la jauge piézorésistive 10 est placée sur une enclume 12 en aluminium, de 20 mm d'épaisseur, et sous une plaque 14 d'aluminium ayant une épaisseur de 4 mm. Le choc est engendré par une feuille d'explosif 16 disposée au-dessus de la plaque 14 et reliée à un détonateur 18.

On précise que la jauge est collée entre les plaques au moyen d'Araldite et que les fils de sortie 20 de la jauge 10 sont reliés à un pont de mesure relié à un oscilloscope, ce qui permet d'enregistrer par photographie l'évolution de la tension aux bornes de la jauge en fonction du temps.

Les résultats obtenus lors de cinq essais différents sont donnés dans le tableau ci-dessous où la tension de crête aux bornes de la jauge (en volts) correspond à la hauteur du pic, soit à la variation maximale de la tension aux bornes de la jauge soumise à l'essai de choc.

Dans ce tableau, on a également indiqué les résultats obtenus en réalisant les mêrmes essais avec une jauge du commerce constituée d'un élément de carbone piézorésistif maintenu entre deux conducteurs de cuivre sur un support de kapton.

Tableau 1

| Essai | Pression engendrée | Tension de crête aux bornes de la jauge (volts) | |
|---|---|---|---|
| | (kbar) | Jauge de l'invention | Jauge de commerce |
| 1 | 5 | 12 | 1,6 |
| 2 | 10 | 13 | 3,2 |
| 3 | 4 | 6,3 | 1,7 |
| 4 | 4 | 8 | 1,3 |

Au vu de ces résultats, on constate que la jauge de l'invention présente une meilleure sensibilité.

Exemple 2

Cet exemple se rapporte à la fabrication de jauges piézorésistives dont l'élément piézorésistif est constitué par un mélange de graphite et de résine époxy.

Dans cet exemple, on part également d'un support isolant réalisé en kapton, ayant une longueur de 50 à 60 mm, sur lequel sont disposés à 5 mm l'un de l'autre deux conducteurs en cuivre de 2,2 mm de large. On dépose au pinceau dans la zone 5 une couche de 3 mm de large d'Aquadag ayant une concentration en graphite mesurée par extrait sec de 408 g/l, et on ajuste l'épaisseur du dépôt pour qu'il présente après séchage, une résistance comprise entre 8 et 10 ohms. Cette résistance est mesurée en courant continu par un multimètre à affichage digital, ce qui permet de suivre la diminution de la résistance au cours du séchage de l'Aquadag et d'ajuster cette resistance à la valeur voule.

Après 6 heures de séchage à température ambiante, on imprégne le dépôt de graphite obtenu au moyen d'une solution de résine époxy et d'un durcisseur dans du méthanol. La résine époxyde est de l'»Araldite D« et elle est mélangée avec un durcisseur de la famille des polyamines de marque »HY 956«, la solution renfermant pour 4 ml de méthanol, 1 g d'»Araldite D« et 0,2 g de durcisseur »HY 956«.

On dépose goutte à goutte cette solution sur la zone 5 recouverte de graphite jusqu'à obtenir une résistance passant par une valeur maximale de 80−90 ohms en cours d'imprégnation. On laisse ensuite les jauges oendant 2 h à la température ambiante, puis on les conditionne pendant 12 h à 80° C

**0 029 772**

dans une étuve sèche.

Ensuite, on colle sur l'ensemble ainsi obtenu une feuille protectrice de Kapton en disposant l'ensemble recouvert de la feuille entre deux pièces métalliques chauffées à 177°C. On constate alors une diminution de la résistance d'une dizaine d'ohms, mais la résistance finale se stabilise vers 50 ohms après un repos de 24 h environ.

On a regroupé dans le tableau 2 ci-dessous les résultats obtenus en ce qui concerne l'évolution de la résistance électrique au cours des différentes étapes du procédé, résistances qui varient en fonction de l'épaisseur du dépôt d'Aquadag et de la quantité de solution d'imprégnation ajoutée.

Tableau 2

| Jauge n° | Rag obtenue après séchage de l'Aquadag ($\Omega$) | Résistance maximale du dépôt de graphite imprégné ($\Omega$) | Résistance après collage à chaud ($\Omega$) | Résistance finale ($\Omega$) $R_0$ |
|---|---|---|---|---|
| 1 | 9,2 | 93 | 40 | 49,4 |
| 2 | 7,1 | 89 | 38 | 51,4 |
| 3 | 9,8 | 60 | 29 | 37,3 |
| 4 | 8,6 | 80 | 43 | 56,8 |
| 5 | 7,6 | 80 | 36 | 44,7 |
| 6 | 10,6 | 82 | 41 | 49,8 |
| 7 | 8,6 | 82 | 43 | 51,4 |
| 8 | 7,6 | 80 | 38 | 48,7 |
| 9 | 10,1 | 82 | 37 | 49,8 |
| 10 | 9,4 | 86 | 39 | 50,2 |

Au vu de ce tableau, on constate qu'on peut ajuster la valeur de la résistance finale de la jauge à environ 50 ohms en ajustant l'épaisseur du dépot d'Aquadag pour qu'il présente après séchage une résistance de 6 à 10 ohms et en ajustant ensuite la quantité de solution d'imprégnation utilisée pour que le dépôt de graphite imprégné présente avant polymérisation de la résine une résistance de 80 à 90 ohms.

On contrôle les propriétés des jauges ainsi obtenues en les soumettant à des essais de choc en utilisant le dispositif représenté sur la fig. 3.

Les résultats otenus sont donnés sur les fig. 4A, 4B et 4C qui représentent l'évolution de la tension (en volts) aux bornes de la jauge en fonction du temps (en microsecondes) pour 3 essais réalisés respectivement à une pression maximum de 11,3 Kbars (fig. 4A) 17,3 Kbars (fig. 4B) 18 Kbars (fig. 4C).

Les profils de pressions obtenus sont bons. Par ailleurs, on note que ces jauges présentent une grande sensibilité et un très bon coefficient de piézorésistivité.

## Revendications

1. Procédé de fabrication d'une jauge piézorésistive, caractérisé en ce qu'il consiste:

a) à préparer un support isolant en matière plastique comportant sur sa surface deux conducteurs métalliques disposés à un écartement donné, et

b) à former entre lesdits conducteurs un élément piézorésistif en déposant entre lesdits conducteurs une dispersion aqueuse de graphite colloïdal, en séchant ladite dispersion, en déposant ensuite entre lesdits conducteurs une résine polymérisable de façon à obtenir un mélange homogène de la résine et du graphite, et en polymérisant ladite résine déposée.

2. Procédé selon la revendication 1, caractérisé en ce que l'on recouvre d'une feuille isolante en matière plastique l'ensemble constitué par le support isolant comportant sur sa surface les deux conducteurs entre lesquels est intercalé ledit élément piézorésistif.

3. Procédé selon l'une quelconque des revendications 1 et 2, caractérisé en ce que la résine est une résine époxyde ou une résine polyimide.

4. Procédé selon l'une quelconque des revendications 1 à 3, caractérisé en ce que l'on dépose ladite résine, après avoir séché la dispersion aqueuse de graphite colloïdal, en faisant diffuser ladite résine entre les grains de graphite obtenus par séchage de ladite dispersion.

5. Procédé selon la revendication 4, caractérisé en ce que l'on dépose ladite résine en imprégnant les grains de graphite obtenus par séchage de ladite dispersion, au moyen d'une solution constituée par ladite résine polymérisable diluée dans un alcool.

6. Procédé selon la revendication 5, caractérisé en ce que l'alcool est le méthanol.

7. Procédé selon l'une quelconque des revendications 1 à 6, caractérisé en ce que ladite résine polymérisable est une résine époxyde mélangée à un durcisseur de la famille des polyamines.

8. Procédé selon l'une quelconque des revendications 5 à 7, caractérisé en ce que la quantité de solution utilisée pour l'imprégnation est telle que le rapport $R_0/R_{aq}$ dans lequel $R_0$ représente la résistance électrique du dépôt de graphite et de résine polymérisée et $R_{aq}$ représente la résistance du dépôt de graphite, avant l'addition de résine, soit supérieur à 5.

9. Procédé selon l'une quelconque des revendications 5 à 8, caractérisé en ce que l'on ajuste l'épaisseur du dépôt de graphite colloïdal de façon telle qu'après séchage le dépôt de graphite présente une résistance $R_{aq}$ comprise entre 6 et 10 ohms et en ce que l'on règle la quantité de solution utilisée pour l'imprégnation à une valeur telle qu'avant polymérisation de la résine le dépôt de graphite imprégné présente une résistance électrique de 80 à 90 ohms.

10. Procédé selon l'une quelconque des revendications 1 à 9, caractérisé en ce que les grains de graphite de la dispersion aqueuse de graphite colloïdal ont une granulométrie moyenne inférieure à 1 μm.

11. Procédé selon l'une quelconque des revendications 1 à 10, caractérisé en ce que la dispersion aqueuse de graphite colloïdal contient 200 à 800 g/l de graphite.

12. Procédé selon l'une quelconque des revendications 5 à 11, caractérisé en ce que la solution utilisée pour l'imprégnation comprend de 0,5 à 5 g de résine époxyde pour 2 à 8 ml de méthanol.

## Patentansprüche

1. Verfahren zur Herstellung eines piezoresistiven Sensors, dadurch gekennzeichnet, daß es darin besteht:

a) einen isolierenden Träger aus Kunststoffmaterial, der auf seiner Oberfläche zwei metallische in einer vorgegebenen Entfernung angeordnete Leiter aufweist, herzustellen und

b) zwischen den Leitern ein piezoresistives Element auszubilden durch Ablagern zwischen den beiden Leitern von einer wäßrigen Dispersion von kolloidalem Graphit, Trocknen der Dispersion und anschließendes Ablagern zwischen den Leitern von einem polymerisierbaren Harz, derart, daß ein homogenes Gemisch des Harzes und des Graphits erhalten wird und Polymerisieren des abgelagerten Harzes.

2. Verfahren nach Anspruch 1, dadurch gekennzeichnet, daß man die Einheit, die aus dem isolierenden Träger gebildet wird, der auf seiner Oberfläche die beiden Leiter aufweist, zwischen die das genannte piezoresistive Elemente eingeschoben ist, mit einer isolierenden Folie aus Kunststoffmaterial bedeckt.

3. Verfahren nach einem der Ansprüche 1 und 2, dadurch gekennzeichnet, daß das Harz ein Epoxidharz oder ein Polyimidharz ist.

4. Verfahren nach einem der Ansprüche 1 bis 3, dadurch gekennzeichnet, daß man das Harz ablagert, nachdem man die wäßrige Dispersion des kolloidalen Graphits getrocknet hat, wobei man das Harz zwischen die durch Trocknen der genannten Dispersion erhaltenen Graphitkörner diffundieren läßt.

5. Verfahren nach Anspruch 4, dadurch gekennzeichnet, daß man das Harz ablagert durch Imprägnieren der durch Trocknen der Dispersion erhaltenen Graphitkörner mittels einer Lösung, die aus dem polymerisierbaren Harz, verdünnt in einem Alkohol, besteht.

6. Verfahren nach Anspruch 5, dadurch gekennzeichnet, daß der Alkohol Methanol ist.

7. Verfahren nach einem der Ansprüche 1 bis 6, dadurch gekennzeichnet, daß das polymerisierbare Harz ein Epoxidharz, vermischt mit einem Härter der Familie der Polyamine, ist.

8. Verfahren nach einem der Ansprüche 5 bis 7, dadurch gekennzeichnet, daß die Menge der zum Imprägnieren verwendeten Lösung derart ist, daß das Verhältnis $R_0/R_{aq}$ in dem $R_0$ den elektrischen Widerstand der Graphitablagerung und des polymerisierten Harzes bedeutet, und $R_{aq}$ den Widerstand der Graphitablagerung vor dem Zusatz des Harzes bedeutet, über 5 liegt.

9. Verfahren nach einem der Ansprüche 5 bis 8, dadurch gekennzeichnet, daß man die Dicke der

**0 029 772**

Ablagerung des kolloidalen Graphits derart einstellt, daß nach dem Trocknen die Graphitablagerung einen Widerstand $R_{aq}$ von 6 bis 10 Ohm aufweist und daß man die Menge der zum Imprägnieren verwendeten Lösung auf einen derartigen Wert einstellt, daß vor der Polymerisation des Harzes die Ablagerung des imprägnierten Graphits einen elektrischen Widerstand von 80 bis 90 Ohm aufweist.

10. Verfahren nach einem der Ansprüche 1 bis 9, dadurch gekennzeichnet, daß die Graphitkörner der wäßrigen Dispersion des kolloidalen Graphits eine mittlere Granulometrie unter 1 μm aufweisen.

11. Verfahren nach einem der Ansprüche 1 bis 10, dadurch gekennzeichnet, daß die wäßrige Dispersion des kolloidalen Graphits 200 bis 800 g/l Graphit enthält.

12. Verfahren nach einem der Ansprüche 5 bis 11, dadurch gekennzeichnet, daß die zum Imprägnieren verwendete Lösung 0,5 bis 5 g Epoxidharz pro 2 bis 8 ml Methanol enthält.


## Claims

1. Process for the manufacture of a piezoresistive gauge, characterized in that it comprises:

a) preparing an insulating support of plastics material having on its surface two metallic conductors disposed at a predetermined spacing, and

b) forming a piezoresistive element between said conductors by depositing an aqueous dispersion of colloidal graphite between the said conductors, drying the said dispersion, subsequently depositing a polymerizable resin between said conductors whereby to obtain a homogeneous mixture of resin and graphite, and polymerizing said deposited resin.

2. Process according to claim 1 characterized in that an insulating cover of a plastics foil is provided on the assembly constituted by the insulating support having on its surface the two conductors between which the said piezoresistive element is interposed.

3. Process according to either of claims 1 and 2 characterized in that the resin is an epoxy resin or polyimide resin.

4. Process according to any one of claims 1 to 3 characterized in that the said resin layer is deposited, after drying of the aqueous dispersion of colloidal graphite, by diffusing the resin between the graphite grains obtained by drying the said dispersion.

5. Process according to claim 4 characterized in that the said resin is deposited by impregnating the graphite grains, obtained by drying the said dispersion, with a solution constituted by said resin diluted with an alcohol.

6. Process according to claim 5 characterized in that the alcohol is methanol.

7. Process according to any one of claims 1 to 6 characterized in that the said polymerizable resin is an epoxy resin mixed with a polyamine hardener.

8. Process according to any one of claims 5 to 7 characterized in that the quantity of solution employed for the impregnation is such that the ratio $R_0/R_{aq}$ is greater than 5, wherein $R_0$ represents the electrical resistance of the deposit of graphite and polymerized resin, and $R_{aq}$ represents the resistance of the deposit of graphite before addition of the resin.

9. Process according to any one of claims 5 to 8 characterized in that the thickness of the deposit of colloidal graphite is adjusted such that, after drying, the deposit of graphite has a resistance $R_{aq}$ of between 6 and 10 ohms, and in that the quantity of solution employed for impregnation is controlled so that the deposit of impregnated graphite has an electric resistance of from 80 to 90 ohms before polymerization of the resin.

10. Process according to any one of claims 1 to 9 characterized in that the grains of graphite in the aqueous dispersion of colloidal graphite have a particle size of less than 1 μm.

11. Process according to any one of claims 1 to 10 characterized in that the aqueous dispersion of colloidal graphite contains 200 to 800 g/l of graphite.

12. Process according to any one of claims 5 to 11 characterized in that the solution employed for impregnation comprises 0.5 to 5 g of epoxy resin for 2 to 8 ml of methanol.

# FIG.1

1  3  5  3

# FIG.3

18

16  14  20

12  10

FIG. 2

# FIG. 4